Europäisches Patentamt

European Patent Office

Office européen des brevets

(19)

(11) Publication number: 0 556 391 A1

## EUROPEAN PATENT APPLICATION
### published in accordance with Art. 158(3) EPC

(12)

(21) Application number: 91918934.0

(22) Date of filing: 05.11.91

(86) International application number:
PCT/JP91/01512

(87) International publication number:
WO 92/08757 (29.05.92 92/12)

(51) Int. Cl.5: C08J 9/22

(30) Priority: 09.11.90 JP 305598/90

(43) Date of publication of application:
25.08.93 Bulletin 93/34

(84) Designated Contracting States:
DE GB

(71) Applicant: KOMATSU LTD.
3-6 Akasaka 2-chome
Minato-ku Tokyo 107(JP)

(72) Inventor: YOKOTA, Akira, Komatsu Ltd.
Plastic Division
1-1, Ueno 3-chome Hirakata-shi
Osaka 573(JP)

(74) Representative: TER MEER - MÜLLER -
STEINMEISTER & PARTNER
Mauerkircherstrasse 45
D-81679 München (DE)

(54) POROUS MATERIAL OF ULTRAHIGH MOLECULAR WEIGHT POLYETHYLENE AND PRODUCTION THEREOF.

(57) A porous material of ultrahigh molecular weight polyethylene containing numerous interconnected pores, having permeability and being useful as filters, carriers and so forth; and a process for effectively producing said material. This material comprises minute particles of plasticized ultrahigh molecular weight polyethylene fused with one another so as to form interconnected pores communicating with the outer atmosphere. It is produced by injecting the plasticized ultrahigh molecular weight polyethylene into the cavity of a mold at a shear rate of $5 \times 10^4$ sec$^{-1}$ or above and filling therein in such a manner that the ratio of $G_0$ to $V_0$ will be 0.7 g/cm$^3$ or less, wherein $G_0$ represents product weight (g) and $V_0$ represents product volume (cm$^3$).

FIG.4

EP 0 556 391 A1

Technical Field

The present invention relates to porous bodies of ultrahigh molecular weight polyethylene containing a large number of penetrating pores and having permeability, and a producing method thereof.

Background Art

Ultrahigh molecular weight polyethylene exhibits excellent chemical resistance and thanks to this property it attracts a good deal of industries' attention as a material of filters, carriers and the like. Injection molding, on the other hand, enables it to easily produce a molded article of a desired shape, so that it is long expected that porous bodies containing a large number of penetrating pores and having permeability are produced from ultrahigh molecular weight polyethylene by means of injection molding.

In injection molding, while a resinous material being melted and plasticized, the molten, plasticized, resinous material is injected into a mold cavity with an injection molder, thereby producing a molded article of a desired shape. In such injection molding, the resinous material injected from the tip of a nozzle in the injection molder into the mold cavity is in a liquid state. The molten plasticized resinous material injected in a liquid state is solidified by cooling, and consequently, the molded article to be produced by such injection molding has a dense, solid body. It is, therefore, thought to be difficult for the injection molding process used for ordinary resinous materials to produce a porous body formed of a collection of minute resin particles.

It has been found that, unlike ordinary resinous materials, when ultrahigh molecular weight resinous material such as ultrahigh molecular weight polyethylene is used in injection molding, the ultrahigh molecular weight polyethylene injected from the nozzle of an injection molder into a mold cavity shows a peculiar floating behavior. More specifically, when the shear rate at the time of injection is a certain level (e.g., $5 \times 10^3$ sec$^{-1}$) or more, molten plasticized ultrahigh molecular weight polyethylene is atomized and injected in the form of powder or cotton as it remains in a molten and plasticized state. In order to cope with such a behaviour, there have been proposed many injection molding techniques among which are those taught by Japanese Patent Publications Laid Open No. 51-81861 (1976), No. 57-169335 (1982) and No. 61-262113 (1986).

According to the conventional techniques disclosed in Japanese Patent Publications Laid Open No. 57-169335 (1982) and No. 61-262113 (1986), when ultrahigh molecular weight polyethylene is injection-molded, it is injected into a mold cavity in cotton-like form at a high shear rate and is strongly compressed after completion of the injection. The result of this is that the molten ultrahigh molecular weight polyethylene in cotton-like form is solidified into a dense body which assumes the specified shape of the mold cavity, and accordingly, a molded porous article cannot be obtained. This is the first problem in producing a porous body from ultrahigh molecular weight polyethylene.

Japanese Patent Publication Laid Open No. 51-81861 (1976) teaches that, if the plasticized ultrahigh molecular weight polyethylene injected into a cavity in cotton candy-like form is compressed to a slight degree, pores will be formed in the molded article, as a natural consequence. However, this technique is most suitably used in producing gears formed of a porous material, in which their teeth consist of a dense solid substance whilst the external face at the centre opening part and the front and back faces of the disk body are plain and smooth. It is understood from the above that the pores included in the porous body of ultrahigh molecular weight polyethylene obtained by the technique disclosed in Japanese Patent Pub. 51-81861(1976) are independent pores and, to say the least, they are not pores leading to the external faces to open to the outside. Such a porous body has the disadvantage that a gas or liquid cannot move from one face of the porous body to the other, passing through the inside of the porous body, and therefore it is not suited for use as a filter or carrier.

The prime object of the invention is therefore to provide, in order to overcome the above problems, a porous body of ultrahigh molecular weight polyethylene that is suitably used as a filter or carrier and a method of effectively producing such a porous body of ultrahigh molecular weight polyethylene.

Disclosure of Invention

In order to accomplish the foregoing object, the invention provides a porous body of ultrahigh molecular weight polyethylene, basically, comprising:
penetrating pores communicating external faces to each other and formed by fusing minute particles of plasticized ultrahigh molecular weight polyethylene so as to be bonded to one another.

Preferably, the minute particles of plasticized ultrahigh molecular weight polyethylene include an additive having a melting point higher than a resin temperature at the time of injection molding, and one example of such an additive is a carbonaceous additive.

Preferably, the porous body of ultrahigh molecular weight polyethylene has a greater distribution of the penetrating pores per unit volume at the centre and in neighborhood of the centre than in the surface layers adjacent to the external faces. Preferably, the porous body of ultrahigh molecular weight polyethylene partially has a dense structure.

In order to obtain the above-described porous body of ultrahigh molecular weight polyethylene, the invention provides a method for producing a porous body of ultrahigh molecular weight polyethylene, basically, wherein:

when plasticized ultrahigh molecular weight polyethylene is injected into a mold cavity, the plasticised ultrahigh molecular weight polyethylene is injected into the mold cavity at a shear rate of $5 \times 10^4$ sec$^{-1}$ or more so that the ratio of $G_0$ to $V_0$ is not more than 0.7(g/cm$^3$) where $V_0$ (cm$^3$) is the volume of a molded article to be obtained and $G_0$ - (g) is its weight.

Preferably, in the above producing method of a porous body of ultrahigh molecular weight polyethylene, the shear rate at which the plasticized ultrahigh molecular weight polyethylene is injected into the mold cavity and the amount of the plasticized ultrahigh molecular weight polyethylene injected into the mold cavity are controlled by controlling opening/closing of flow path opening means that is disposed between a cylinder of an injection molder and the mold cavity and is capable of preventing a flow of plasticized ultrahigh molecular weight polyethylene between the cylinder and the mold cavity.

An additive having a melting point higher than a resin temperature at the time of injection molding is preferably added to the plasticized ultrahigh molecular weight polyethylene, and one example of such an additive is a carbonaceous additive. It is also preferable that injection molding is done with an additive added to the plasticised ultrahigh molecular weight polyethylene, the additive having a melting point higher than a resin temperature at the time of injection molding, and after completion of injection molding, the additive is removed from the molded article, using a solvent which does not dissolve the ultrahigh molecular weight polyethylene but dissolves the additive. One example of such an additive is sodium chloride crystals.

In order to inject the plasticised ultrahigh molecular weight polyethylene into the mold cavity so that the ratio of $G_0$ to $V_0$ is 0.7(g/cm$^3$) or less, it is preferable that the volume of the mold cavity is set to the volume $V_0$ (cm$^3$) of the molded article to be obtained and plasticized ultrahigh molecular weight polyethylene whose weight is equal to the weight $G_0$ (g) of the molded article is injected. Alternatively, the volume of the mold cavity is set to more than the volume $V_0$ (cm$^3$) of the molded article and after plasticized ultrahigh molecular weight polyethylene having a weight equal to the

weight $G_0$ (g) of the molded article has been injected, parts of the mold cavity or the whole mold cavity is compressed so that the volume of the mold cavity becomes equal to the volume $V_0$ (cm$^3$) of the molded article.

Since ultrahigh molecular weight polyethylene has a very high molecular weight, therefore exhibiting excellent chemical resistance, a porous body containing a large number of penetrating pores and formed from ultrahigh molecular weight polyethylene is best for use as filters for various kinds of substances or carriers used to bear specific participating substances during a reaction process or treatment process. However, it is impossible to mold ultrahigh molecular weight polyethylene into a desired shape by normal injection molding process because of the very high molecular weight of the ultrahigh molecular weight polyethylene. Therefore, the method usually taken is such that: plasticized ultrahigh molecular weight polyethylene is injected into a mold cavity in the form of minute particles at a shear rate of $5 \times 10^4$ sec$^{-1}$ or more from the injection molder and the mold cavity is then compressed in order to solidify the ultrahigh molecular weight polyethylene according to the necessity. In the invention, during the solidification stage, the volume of the mold cavity and the injection amount of plasticized ultrahigh molecular weight polyethylene are controlled such that they become equal to the volume $V_0$ (cm$^3$) and the weight $G_0$ (g) of the molded article respectively and the ratio of $G_0$ to $V_0$ is a specified value, in order to produce a porous body of ultrahigh molecular weight polyethylene containing a large number of penetrating pores.

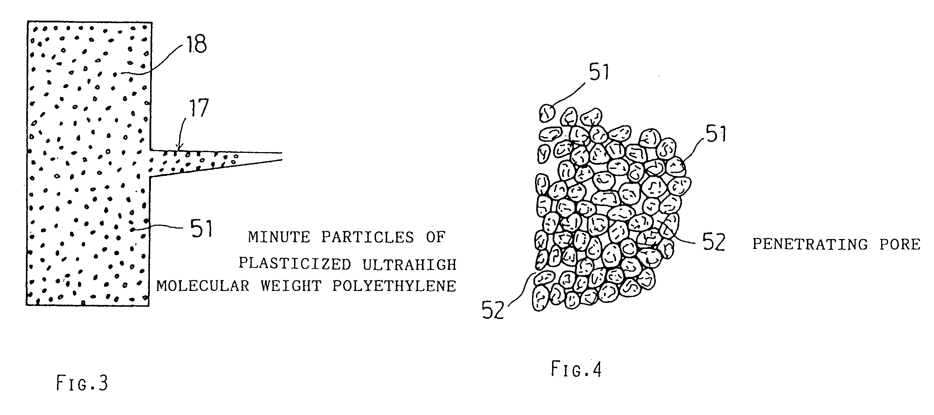

Reference is first made to Figures 3 and 4. Before the compression of a cavity 18 of a mold, a molten resin in the cavity 18 is in a condition where minute particles 51 of ultrahigh molecular weight polyethylene are sparsely distributed, although it depends on the ratio of $G_0$ to $V_0$. If the ultrahigh molecular weight polyethylene in such a condition is cooled and taken out of the cavity 18, the article to be obtained will be brittle. Therefore, if the whole cavity 18 is compressed, reducing its volume when each particle 51 of ultrahigh molecular weight polyethylene is in a molten state just after completion of injection, the minute particles 51 of ultrahigh molecular weight polyethylene will be brought in contact with one another with the result that the molten surfaces of the minute particles are fused and bonded to one another. At that time, air gaps (shown in the enlarged view of Figure 4) between the fused minute particles 51 of plasticized ultrahigh molecular weight polyethylene in the cavity 18 have to be kept as the penetrating pores 52, or otherwise a molded article of a porous body cannot be obtained. Since the average diameter of the minute particles of plasticized ultrahigh molecular weight polyethylene is 200 to 300 $\mu$m and the minute particles are evenly distributed, the air gaps between the minute particles can be positively kept as penetrating pores by appropriately controlling the compressing amount of the volume of the cavity 18 (this control includes non-compression of the cavity 18).

The distribution rate of penetrating pores in the porous body of ultrahigh molecular weight polyethylene is calculated as follows.

The density of ultrahigh molecular weight polyethylene is about 0.93 g/cm$^3$ at room temperature and about 0.76 g/cm$^3$ when it is in a molten state, for example, at 180°C. The density $\rho_0$ (g/cm$^3$) of the molded article containing penetrating pores is described by $\rho_0 = G_0 / V_0$ where $V_0$ is the volume (cm$^3$) of the molded article to be obtained and $G_0$ is its weight (g). Since the ultrahigh molecular weight polyethylene is in a molten state during molding, if the ratio of $G_0$ to $V_0$ is less than 0.76 (g/cm$^3$), it is understood that minute particles of ultrahigh molecular weight polyethylene are not densely distributed and therefore pores exist between the minute particles. In order to produce a solid porous body by cooling such plasticized ultrahigh molecular weight polyethylene in a molten state, the distribution rate of penetrating pores in the solid porous body should be a value described by the following equation (1).

$$\{1 - G_0 / (V_0 \times 0.93)\} \times 100 \ (\%) \qquad (1)$$

However, the volume $V_0$ (cm$^3$) of the molded article is a specified value since the porous body of ultrahigh molecular weight polyethylene is formed in a desired shape. It is, therefore, understood that the distribution rate of penetrating pores can be adjusted by controlling $G_0$ (g).

Where $V_1$ (cm$^3$) is the volume of the cavity 18 just before plasticized ultrahigh molecular weight polyethylene is injected in the form of minute particles and $V_0$ (cm$^3$) is the volume of the cavity 18 after compression (the volume of the molded article to be obtained), the higher the ratio of $V_1$ to $V_0$ is, the more homogeneous the overall particle distribution becomes. A porous body in which minute particles are unevenly distributed is sometimes required and in such a porous body, the ratio of $V_1$ to $V_0$ is 1. When the ratio of $V_1$ to $V_0$ is 1, there is no need to compress the volume of the cavity and fusing/bonding of minute particles of plasticized ultrahigh molecular weight polyethylene in a molten state is controlled according to the degree of injection filling. In addition to the above-described method in which the whole cavity is compressed, thereby fusing and bonding minute particles of plasticized ultrahigh molecular weight polyethylene in a molten state, there is another method for producing a porous body of ultrahigh molecular weight polyethylene. Specifically, a cavity is partially compressed, thereby forming areas where minute particles of plasticized ultrahigh molecular weight polyethylene are densely distributed and, as a consequence, a porous body of ultrahigh molecular weight polyethylene formed in a composite structure, that is, consisting of porous areas and dense areas can be obtained.

If an additive having a melting point higher than the resin temperature at the time of injection is added to plasticized ultrahigh molecular weight polyethylene, the additive allows the porous body of ultrahigh molecular weight polyethylene to be obtained to be used in wider applications as a carrier used to bear specific participating substances during a reaction process or treatment process. For example, by adding a carbonaceous additive such as activated carbon during molding, a porous body of ultrahigh molecular weight polyethylene that can be used as deodorant is obtained. Further, injection molding is carried out with an additive added to plasticized ultrahigh molecular weight polyethylene, the additive having a melting point higher than the temperature of the resin at the time of injection, and after molding, the additive is eliminated by means of a solvent which cannot dissolve ultrahigh molecular weight polyethylene but the additive, whereby air gaps serving as pores can be created after the elimination of the additive. By selectively using additives having different particle diameters, a porous body of ultrahigh molecular weight polyethylene whose pores have a desired diameter can be obtained. For example, sodium chloride crystals are added to ultrahigh molecular weight polyethylene and after injection molding, the sodium chloride crystals are dissolved and washed away by water, thereby obtaining a porous body of ultrahigh molecular weight polyethylene having a desired pore diameter.

Brief Description of Drawings

Figures 1 through 4 are for illustrating a preferred embodiment of a porous body of ultrahigh molecular weight polyethylene and a producing method thereof according to the invention;

Figure 1 is a semi diagrammatical vertical sectional view of the whole structure of an injection molding apparatus used for producing the porous body of ultrahigh molecular weight polyethylene according to the invention;

Figure 2 is an enlarged vertical section of an essential part of Figure 1;

Figure 3 is a view for illustrating the condition of minute particles of plasticized ultrahigh molecular weight polyethylene which have been injected into a mold cavity;

Figure 4 illustrates the structure of the porous body of ultrahigh molecular weight polyethylene;

Figures 5 and 6 are for illustrating another embodiment of the invention;

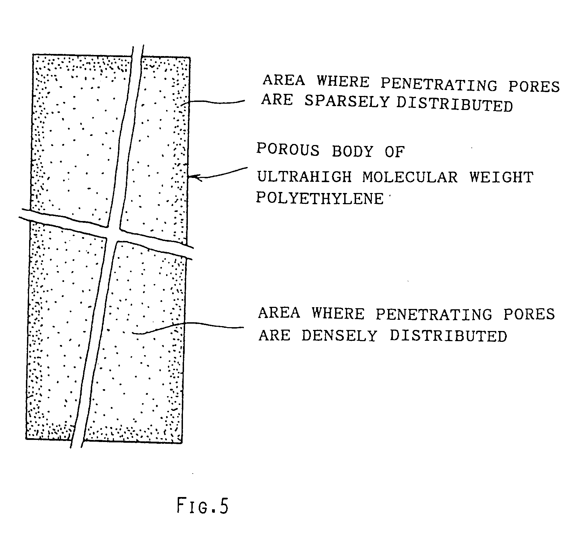

Figure 5 is a view for illustrating the structure of a porous body of ultrahigh molecular weight polyethylene; and

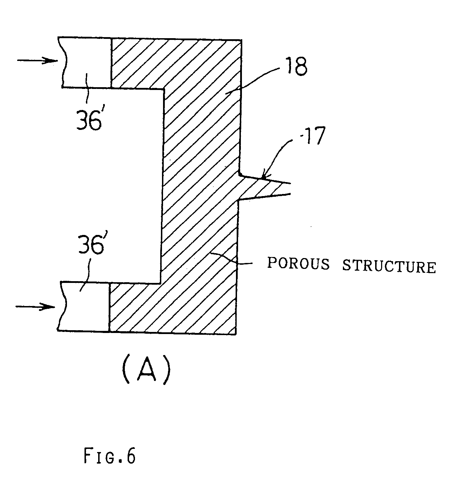

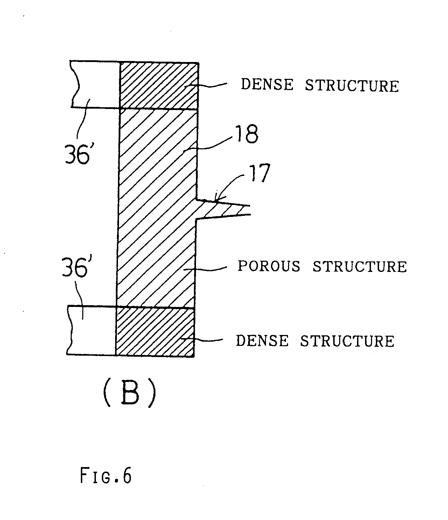

Figures 6(A) and 6(B) illustrate the partial compression of the porous body of ultrahigh molecular weight polyethylene.

Best Mode for Carrying Out the Invention

A method for producing a porous body of ultrahigh molecular weight polyethylene and its products according to a first embodiment of the invention will be explained with reference to the drawings.

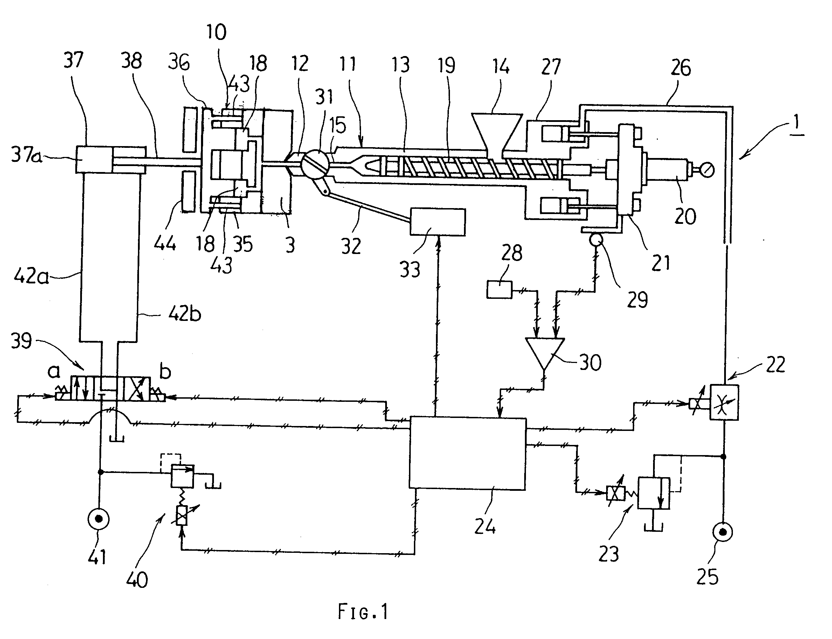

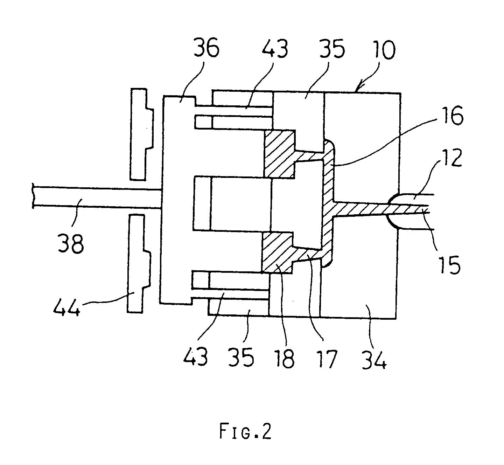

Reference will be first made to Figure 1 which illustrates the outline of the whole structure of an injection molding apparatus 1 including an injection molder and a hydraulic circuit. In this figure, a mold 10 for forming molded articles is connected to a nozzle 12 of an injection molder 11. There is provided a screw 19 housed in a cylinder 13 of the injection molder 11. While fusing and mixing pellets of ultrahigh molecular weight polyethylene supplied from a material hopper 14, the screw 19 weighs the resinous material thus melted and plasticized, and injects it to the cavity 18 of the mold 10 through a flow pass 15 set as to pierce into the nozzle 12, and a runner 16 and a gate 17 disposed in the mold 10 (see Figure 2). The rotating movement of the screw 19 for fusing and mixing the resinous pellet material is carried out by a screw rotating motor 20. The screw 19 and the screw rotating motor 20 are mounted on a base plate 21. The base plate 21 is driven laterally (in the drawing) with pressure oil which is supplied from a pressure oil source 25 to a hydraulic piston system 27 through a conduit 26 and exhausted therefrom, by controlling a flow control valve 22 and a solenoid relief valve 23 by means of a control unit 24. In other words, (i) weighing of ultrahigh molecular weight polyethylene to be injected, (ii) the forward/backward movement of the screw 19 with respect to the nozzle 12 in order to inject the weighed ultrahigh molecular weight polyethylene into the cavity 18 of the mold 10, and (iii) applying of a specified pressing force to the screw 19 in order to inject the ultrahigh molecular weight polyethylene from the cylinder 13 by a specified injection pressure are carried out through the base plate 21, by supplying pressure oil to the hydraulic piston system 27 or exhausting the pressure oil therefrom. The forward/backward movement of the screw 19 is controlled by the control unit 24 according to a stroke set value set by a stroke setting device 28. More concretely, the stroke set value is compared, by a comparator 30, to a positional value of the screw 19 that is obtained from measurement by means of a screw position detector 29 engaged with the base plate 21; a signal informing the result of the comparison is supplied from the comparator 30 to the control unit 24 for controlling the hydraulic system; and the amount of pressure oil to be fed from the pressure oil source 25 to the hydraulic piston system 27 is controlled by the flow control valve 22 and the solenoid relief valve 23, whereby the forward/backward movement of the screw 19 is determined. Similarly, the rotation of the screw rotating motor 20 is started or stopped in response to a signal (not shown) that is sent from the control unit 24 in connection with the forward/backward movement of the screw 19.

The nozzle 12 is provided with a flow path 15 having a shut-off valve 31 that serves as flow path opening means capable of preventing a flow of plasticized ultrahigh molecular weight polyethylene between the cylinder 13 of the injection molder 11 and the cavity 18 of the mold 10. The opening/closing operation of the shut-off valve 31 is performed by controlling a driving unit 33 with a control unit 24 through an operation lever 32. By controlling the opening/closing operation of the shut-off lever 31, the shear rate for plasticized ultrahigh molecular weight polyethylene to be injected into the cavity 18 of the mold 10 and the injection amount of plasticized ultrahigh molecular weight polyethylene can be controlled.

As shown in Figures 1 and 2, the mold 10 comprises a fixed mold 34 connected to the nozzle 12 of the injection molder 11, an intermediate mold 35 for defining the cavity 18 and a compression plate 36. The volume of the cavity 18 is varied by moving the compression plate 36 forwards or backwards. The compression plate 36 is engaged with a piston rod 38 of a compression cylinder 37. The piston rod 38 is driven laterally (in the drawing) by means of pressure oil that is supplied from a pressure oil source 41 to the compression cylinder 37 through conduits 42a, 42b and exhausted therefrom, by controlling a solenoid selector valve 39 and a solenoid relief valve 40 with the control unit 24. More concretely, when a solenoid a of the solenoid selector valve 39 is energized, pressure oil is supplied from the pressure oil source 41 to a piston side 37a of the compression cylinder 37, thereby driving the piston rod 38 to the right (in the drawing). This allows the compression plate 36 to move forwards so that the volume of the cavity 18 is reduced. On the other hand, when the solenoid a of the solenoid selector valve 39 is de-energized and a solenoid b of it is energized, the pressure oil that has been supplied to the piston side 37a of the compression cylinder 37 is exhausted, thereby driving the piston rod 38 to the left (in the drawing). This allows the compression plate 36 to move backwards so that the volume of the cavity 18 is expanded. Provided on the compression plate 36 is a return pin 43 that comes in contact with the intermediate mold 35 during the forward movement of the compression plate 36, thereby restricting the forward movement of the compression plate 36 in order to ensure the minimum volume of the cavity 18. Provided at the back of the compression plate 36 is a stopper 44 that comes in contact with the compression plate 36 during the backward movement of the compression plate 36, thereby restricting the backward movement of the compression plate 36 in order to ensure the maximum volume of the cavity 18.

There are also provided a heater for heating the cylinder 13 and a cooling device for cooling the mold 10 although they are not shown in Figure 1.

There will be given an explanation on a method for producing a porous body of ultrahigh molecular weight polyethylene under the following molding conditions by the use of the above-described injection molding apparatus 1.

As a resinous material, ultrahigh molecular weight polyethylene "HI-ZEX Million 340M" produced by MITSUI PETROCHEMICAL INDUSTRIES, LTD. (melt index = 0.01g/10min. or less, limiting viscosity $[ \eta ]$ = 16.7dl/g) is used. The molding conditions are set as follows: molding temperature = 250° C, the temperature of the mold = 70° C, injection hours = 90/100 sec., injection pressure = 2,000kg/cm$^2$, shear rate = $5 \times 10^4$ sec.$^{-1}$. The mold 10 for forming a disk-shaped porous body of ultrahigh molecular weight polyethylene having a diameter of 95mm and a thickness of 6 to 12mm is employed. The $G_0/V_0$ ratio of the porous body of ultrahigh molecular weight polyethylene to be obtained is 0.6(g/cm$^3$).

(1) Mold closing process:

The mold 10 is closed with a well-known means. With the mold 10 and the shut-off valve 31 being closed, the compression plate 36 is driven by controlling the solenoids a and b of the solenoid selector valve 39, the solenoid selector valve 39 and the solenoid relief valve 40, such that the volume of the cavity 18 is set to more than the volume $V_0$ (cm$^3$) of the molded article to be obtained.

(2) Injection process:

Before injecting the plasticized ultrahigh molecular weight polyethylene from the cylinder 13 into the cavity 18, a specified value is set in the flow control valve 22 and the solenoid relief valve 23 for generating a specified injection pressure, and a specified stroke value is set in the stroke setting device 28 for filling the cavity 18 with the plasticized ultrahigh molecular weight polyethylene the weight of which is equal to the weight $G_0$ (g) of the molded article to be obtained. The shut-off valve 31 is then so opened as to generate a shearing force of a specified rate and the screw 19 is moved forwards by supplying pressure oil from the pressure oil source 25 to the hydraulic piston system 27 through the conduit 26, whereby the plasticized ultrahigh molecular weight polyethylene is jetted and injected into the cavity 18 of the mold 10 in the form of minute particles. After that, the shut-off valve 31 is closed upon detection of reaching of the screw 19 at a predetermined position, in other words, at the time that the plasticized ultrahigh molecular weight polyethylene having a weight equal to the preset weight $G_0$ (g) of the molded article has been injected into the cavity 18. When the shut-off valve 31 is closed, the resin in the cavity 18 of the mold 10 is in such a condition that the minute particles 51 of plasticized ultrahigh molecular weight polyethylene gather together as shown in Figure 3.

(3) Compression process:

With the shut-off valve 31 closed, the solenoid a of the solenoid selector valve 39 is energized for driving the compression plate 36 to the right (in the drawing), thereby compressing the volume of the cavity 18 of the mold 10 so as to be equal to the volume $V_0$ (cm$^3$) of the molded article to be obtained. It can be confirmed by checking whether the return pin 43 of the compression plate 36 has come in contact with the intermediate mold 35 that the volume of the cavity 18 has been compressed to the specified volume $V_0$ (cm$^3$) of the molded article. Accordingly, by compressing the volume of the cavity 18 just after injection to the volume $V_0$ (cm$^3$) of the molded article of a porous body of ultrahigh molecular weight polyethylene, the plasticized ultrahigh molecular weight polyethylene which has been injected into the cavity 18 in the preceding process and in which the minute particles 51 gather together is so fused that the surface layers of the minute particles are bonded to one another and air gaps are created between the fused minute particles.

(4) Holding/cooling process:

By the use of a known means, holding pressure is applied to the plasticized ultrahigh molecular weight polyethylene which has been injected into the cavity 18 and then, the ultrahigh molecular weight polyethylene is cooled. The solidification by cooling allows the air gaps which have been created between the minute particles 51 of plasticized ultrahigh molecular weight polyethylene in the preceding process to form penetrating pores 52 distributed within the body. Each of the penetrating pores 52 penetrates through the body and has openings at the external faces. Such pores impart permeability to the porous body of ultrahigh molecular weight polyethylene on the whole. As shown in Figure 4 illustrating an essential part, in the porous body of ultrahigh molecular weight polyethylene thus formed, the minute particles 51 of ultrahigh molecular weight polyethylene are fused and bonded to one another in the so-called bonding condition and the penetrating pores 52 are distributed throughout the porous body 50 of ultrahigh molecular weight polyethylene at the substantially same rate.

(5) Mold opening/ejecting process:

After the plasticized ultrahigh molecular weight polyethylene in the cavity 18 has been cooled and solidified, the mold 10 is opened by a known means and the porous body of ultrahigh molecular weight polyethylene is ejected off.

In this embodiment, the ratio of the weight $G_0$ - (g) of the porous body of ultrahigh molecular weight polyethylene to be obtained to its volume $V_0$ (cm$^3$) is set to 0.6 (g/cm$^3$). The preferable range of the $G_0/V_0$ ratio is 0.7 to 0.3 (g/cm$^3$). If the ratio exceeds 0.7 (g/cm$^3$), it comes closer to the density of ultrahigh molecular weight polyethylene in a molten state (i.e., 0.76 (g/cm$^3$)) with the result that the number of penetrating pores 52 is reduced, decreasing the permeability of the body. On the other hand, if the ratio is less than 0.3 (g/cm$^3$), it is similar to the bulk density of ultrahigh molecular weight polyethylene powder so that the porous body of ultrahigh molecular weight polyethylene is likely to be brittle. When the porous body of ultrahigh molecular weight polyethylene is used as a filter, the $G_0/V_0$ ratio preferably falls in the range of about 0.5 to 0.7 (g/cm$^3$), and when it is used as a carrier, the $G_0/V_0$ ratio preferably falls in the range of about 0.3 to 0.5 (g/cm$^3$).

In the foregoing embodiment, the molded article having the specified volume $V_0$ (cm$^3$) is obtained in such a way that the volume of the cavity 18 of the mold 10 is preliminarily expanded to more than the volume $V_0$ (cm$^3$) of the molded article and then the volume of the cavity 18 is compressed after injection of plasticized ultrahigh molecular weight polyethylene, but the following alternative method could be taken depending on the use of the molded article and the $G_0/V_0$ ratio: the volume of the cavity 18 of the mold 10 is first set to the volume $V_0$ (cm$^3$) of the molded article and a porous body of ultrahigh molecular weight polyethylene is formed without the compression process. Further, the distribution rate of the penetrating pores 52 in the neighborhood of the external faces of the porous body of ultrahigh molecular weight polyethylene can be differed from that in the neighborhood of the centre, depending on the presence/absence of the compression process, the degree of compression and the $G_0/V_0$ ratio. For example, in the porous body 50 of ultrahigh molecular weight polyethylene shown in Figure 5, the external faces and the surface layers adjacent to the external faces are the areas where less penetrating pores are distributed, and the centre and its neighborhood are the areas where more penetrating pores are distributed. The porous body of ultrahigh molecular weight polyethylene having such a structure not only exhibits a desired permeability but also has more excellent mechanical strength at the surface layers than at the central area, that is, the mechanical strength can be reinforced selectively in required areas.

If the cavity 18 is compressed by the use of a compression plate 36' as shown in Figure 6(A), which is so designed as to compress only a part (outer periphery) of the cavity 18, the portion in the compressed area has a dense structure containing an extremely small number of penetrating pores 52 or no penetrating pores 52 as shown in Figure 6(B) and exhibits superior mechanical strength. On the other hand, the portion in the central area which is not compressed is formed in a porous structure having the penetrating pores 52 as shown in Figure 4. When such a porous body of ultrahigh molecular weight polyethylene having a composite structure is used as a filter, the central area may be used as a filter, with the mechanically stronger outer peripheral area being fixedly supported. This eliminates the need for O-shape rings or the like that are usually required in a filter entirely formed in a porous structure in order to support it. For producing the porous body of ultrahigh molecular weight polyethylene having a composite structure, only a part of the cavity 18 may be compressed as shown in Figure 6, or alternatively, the so-called two-stage compression may be carried out with a compression plate of the dual type having different strokes.

It is also possible that an additive is added to the resinous material i.e., ultrahigh molecular weight polyethylene, the additive having a melting point higher than a resin temperature at the time of injection molding, in such a manner that the additive is dispersed in the structure of the porous body of ultrahigh molecular weight polyethylene. For example, minute particles of activated carbon may be used as the additive in order to produce a porous body of ultrahigh molecular weight polyethylene of a desired shape having a deodorizing property. The adding rate of such an additive preferably does not exceed the rate of the penetrating pores in volume.

Another alternative is that an additive is first added to the resinous material i.e., ultrahigh molecular weight polyethylene, the additive having a melting point higher than the resin temperature at the time of injection molding, in such a manner that the additive is dispersed in the structure of the porous body of ultrahigh molecular weight polyethylene, and that after molding, the additive is removed using a solvent that does not dissolve the ultrahigh molecular weight polyethylene but the additive. The diameter of the penetrating pores 52 can be controlled by selecting the best out of additives having different particle diameters. For example, fine crystals of sodium chloride may be used as the additive and water may be used as the solvent. Since the porous body of ultrahigh molecular weight polyethylene has a large number of penetrating pores 52 in the structure thereof, the solvent can easily penetrate through the body so that the additive can be easily removed.

As has been described above, when the porous body of ultrahigh molecular weight polyethylene of the invention is used as a filter for various liquids or gases, or as a carrier to bear specific participating substances of enzyme, catalyst, ion, absorbent etc., it exerts improved workability and durability in its applications.

The injection amount of plasticized ultrahigh molecular weight polyethylene in order to obtain the porous body of ultrahigh molecular weight polyethylene is preferably controlled by the opening/closing operation of the shut-off valve 31 disposed at the nozzle 12 of the injection molder 11, but even if there is not provided the shut-off valve 31 in the injection molder, the amount can be controlled by immediately stopping the injection just after ultrahigh molecular weight polyethylene having a weight equal to the weight $G_0$ (g) of the molded article has been injected. There are various methods for stopping the injection, and with any of the following methods, the invention can be satisfactorily accomplished:

(a) with the plasticizing measurement value before injection being fixed, ultrahigh molecular weight polyethylene is injected as far as the screw advances mechanically.
(b) after injection has been done for specified strokes, the injection pressure is immediately reduced, thereby terminating the injection;
(c) after injection has been done for a specified period of time, the injection pressure is immediately reduced, thereby terminating the injection; and

(d) after injection has been done as far as the injection pressure reached a specified value, the injection pressure is immediately reduced, thereby terminating the injection.

Industrial Applicability

In a producing method of a porous body of ultrahigh molecular weight polyethylene according to the invention, a porous body of ultrahigh molecular weight polyethylene of a desired shape can be easily produced since an injection molder is used, and the distributing condition of penetrating pores and the diameter of a pore can be easily controlled by mixing with an additive, controlling the filling density ($G_0/V_0$ ratio) of plasticized ultrahigh molecular weight polyethylene injected into the mold cavity, compressing the volume of the mold cavity after injection and/or controlling the degree of the compression. The porous body of ultrahigh molecular weight polyethylene formed by the above producing method exhibits excellent chemical resistance inherent to ultrahigh molecular weight polyethylene as well as permeability. Further it is excellent in the ability of keeping self-configuration and mechanical strength, so that it can be used in a wide variety of applications as a filter or carrier.

**Claims**

1.  A porous body of ultrahigh molecular weight polyethylene comprising:
    penetrating pores communicating external faces to each other and formed by fusing minute particles of plasticized ultrahigh molecular weight polyethylene so as to be bonded to one another.

2.  The porous body of ultrahigh molecular weight polyethylene as claimed in Claim 1, wherein the minute particles of plasticized ultrahigh molecular weight polyethylene include an additive having a melting point higher than a resin temperature at the time of injection molding.

3.  The porous body of ultrahigh molecular weight polyethylene as claimed in Claim 2, wherein the additive is a carbonaceous additive.

4.  The porous body of ultrahigh molecular weight polyethylene as claimed in any one of Claims 1 to 3, wherein the distribution of the penetrating pores per unit volume at the centre and in its neighborhood is greater than that in surface layers adjacent to the external faces.

5. The porous body of ultrahigh molecular weight polyethylene as claimed in any one of Claims 1 to 3, partially having a dense structure.

6. A method for producing a porous body of ultrahigh molecular weight polyethylene, wherein when plasticized ultrahigh molecular weight polyethylene is injected into a mold cavity, the plasticized ultrahigh molecular weight polyethylene is injected into the mold cavity at a shear rate of $5 \times 10^4$ sec$^{-1}$ or more so that the ratio of $G_0$ to $V_0$ is not more than 0.7(g/cm$^3$) where $V_0$ (cm$^3$) is the volume of a molded article to be obtained and $G_0$ (g) is its weight.

7. The method for producing a porous body of ultrahigh molecular weight polyethylene as claimed in Claim 6, wherein the shear rate at which plasticized ultrahigh molecular weight polyethylene is injected into the mold cavity and the amount of plasticized ultrahigh molecular weight polyethylene injected into the mold cavity are controlled by controlling opening/closing of flow path opening means that is disposed between a cylinder of an injection molder and the mold cavity and is capable of preventing a flow of plasticized ultrahigh molecular weight polyethylene between the cylinder and the mold cavity.

8. The method for producing a porous body of ultrahigh molecular weight polyethylene as claimed in Claim 6, wherein an additive having a melting point higher than a resin temperature at the time of injection molding is added to plasticized ultrahigh molecular weight polyethylene.

9. The method for producing a porous body of ultrahigh molecular weight polyethylene as claimed in Claim 6, wherein injection molding is done with an additive added to the plasticized ultrahigh molecular weight polyethylene, the additive having a melting point higher than a resin temperature at the time of injection molding, and after completion of injection molding, the additive is removed from the molded article, using a solvent which does not dissolve ultrahigh molecular weight polyethylene but dissolves the additive.

10. The method for producing a porous body of ultrahigh molecular weight polyethylene as claimed in Claim 6, wherein the shear rate at which plasticized ultrahigh molecular weight polyethylene is injected into the mold cavity and the amount of plasticized ultrahigh molecular weight polyethylene injected into the mold cavity are controlled by controlling opening/closing of flow path opening means that is disposed between a cylinder of an injection molder and the mold cavity and is capable of preventing a flow of plasticized ultrahigh molecular weight polyethylene between the cylinder and the mold cavity, and an additive having a melting point higher than a resin temperature at the time of injection molding is added to plasticized ultrahigh molecular weight polyethylene.

11. The method for producing a porous body of ultrahigh molecular weight polyethylene as claimed in Claim 6, wherein the shear rate at which plasticized ultrahigh molecular weight polyethylene is injected into the mold cavity and the amount of plasticized ultrahigh molecular weight polyethylene injected into the mold cavity are controlled by controlling opening/closing of flow path opening means that is disposed between a cylinder of an injection molder and the mold cavity and is capable of preventing a flow of plasticized ultrahigh molecular weight polyethylene between the cylinder and the mold cavity; an additive having a melting point higher than a resin temperature at the time of injection molding is added to plasticized ultrahigh molecular weight polyethylene; and after completion of injection molding, the additive is removed from the molded article, using a solvent which does not dissolve ultrahigh molecular weight polyethylene but dissolves the additive.

12. The method for producing a porous body of ultrahigh molecular weight polyethylene as claimed in Claim 8, wherein the additive is a carbonaceous additive.

13. The method for producing a porous body of ultrahigh molecular weight polyethylene as claimed in Claim 10, wherein the additive is a carbonaceous additive.

14. The method for producing a porous body of ultrahigh molecular weight polyethylene as claimed in Claim 9, wherein the additive is sodium chloride crystals.

15. The method for producing a porous body of ultrahigh molecular weight polyethylene as claimed in Claim 11, wherein the additive is sodium chloride crystals.

16. The method for producing a porous body of ultrahigh molecular weight polyethylene as claimed in any one of Claims 6 to 15, wherein the volume of the mold cavity is set to the volume $V_0$ (cm$^3$) of the molded article to be obtained and plasticized ultrahigh molecular weight polyethylene having a weight equal to the weight $G_0$ (g) of the molded article is injected.

17. The method for producing a porous body of ultrahigh molecular weight polyethylene as claimed in any one of Claims 6 to 15, wherein the volume of the mold cavity is set to more than the volume $V_0$ (cm$^3$) of the molded article to be obtained and after plasticized ultrahigh molecular weight polyethylene having a weight equal to the weight $G_0$ (g) of the molded article has been injected, the whole mold cavity is compressed to $V_0$ (cm$^3$).

18. The method for producing a porous body of ultrahigh molecular weight polyethylene as claimed in any one of Claims 6 to 15, wherein the volume of the mold cavity is set to more than the volume $V_0$ (cm$^3$) of the molded article to be obtained and after plasticized ultrahigh molecular weight polyethylene having a weight equal to the weight $G_0$ (g) of the molded article has been injected, the mold cavity is partially compressed as far as the volume of the mold cavity becomes $V_0$ (cm$^3$).

FIG.1

FIG.2

18
17
51
MINUTE PARTICLES OF
PLASTICIZED ULTRAHIGH
MOLECULAR WEIGHT POLYETHYLENE

FIG.3

51
51
52  PENETRATING PORE
52

FIG.4

AREA WHERE PENETRATING PORES
ARE SPARSELY DISTRIBUTED

POROUS BODY OF
ULTRAHIGH MOLECULAR WEIGHT
POLYETHYLENE

AREA WHERE PENETRATING PORES
ARE DENSELY DISTRIBUTED

Fig.5

(A)

FIG.6

DENSE STRUCTURE

36'

18

17

36'

POROUS STRUCTURE

DENSE STRUCTURE

(B)

Fig.6

# INTERNATIONAL SEARCH REPORT

International Application No PCT/JP91/01512

**I. CLASSIFICATION OF SUBJECT MATTER (if several classification symbols apply, indicate all) 6**

According to International Patent Classification (IPC) or to both National Classification and IPC

Int. Cl$^5$  C08J9/22

**II. FIELDS SEARCHED**

| Minimum Documentation Searched 7 | |
|---|---|
| Classification System | Classification Symbols |
| IPC | C08J9/16-C08J9/28 |

| Documentation Searched other than Minimum Documentation to the Extent that such Documents are Included in the Fields Searched 8 | |
|---|---|
| Jitsuyo Shinan Koho | 1926 - 1991 |
| Kokai Jitsuyo Shinan Koho | 1971 - 1991 |

**III. DOCUMENTS CONSIDERED TO BE RELEVANT 9**

| Category * | Citation of Document, 11 with indication, where appropriate, of the relevant passages 12 | Relevant to Claim No. 13 |
|---|---|---|
| X | JP, B2, 64-7616 (Mitsuboshi Belt K.K.), February 9, 1989 (09. 02. 89), (Family: none) | 1 |
| Y | JP, B2, 56-10344 (Somarl Kogyo K.K.), March 7, 1981 (07. 03. 81), (Family: none) | 2-18 |
| Y | JP, A, 61-283634 (Asahi Chemical Industry Co., Ltd.), December 13, 1986 (13. 12. 86), (Family: none) | 2-18 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| January 6, 1992 (06. 01. 92) | January 28, 1992 (28. 01. 92) |
| International Searching Authority | Signature of Authorized Officer |
| Japanese Patent Office | |

Form PCT/ISA/210 (second sheet) (January 1985)